# EUROPEAN PATENT APPLICATION

(11) **EP 3 705 774 A1**
(43) Date of publication of application: **09.09.2020**
(21) Application number: 18872981.8
(22) Date of filing: 26.10.2018
(51) Int. Cl.: F21S 2/00, B32B 7/02, B32B 25/14, B32B 27/20, B60K 35/00, B60K 37/00, D06N 3/00, F21V 3/00, F21Y 101/00, F21Y 103/00, F21Y 115/10

(54) **LEATHER-LIKE SHEET AND LEATHER-LIKE DISPLAY MEMBER**

(30) Priority: 30.10.2017 JP 2017209306
(71) Applicant: Teijin Limited, Osaka-shi, Osaka 530-0005 (JP)
(72) Inventor: HAYASHI Kouichi, Ooda-shi Shimane 694-0041 (JP); TERAOKA Akira, Osaka-shi Osaka 530-0005 (JP); KUBO Koji, Osaka-shi Osaka 530-0005 (JP)
(74) Representative: Beckmann, Claus
(86) International application number: PCT/JP2018/039796
(87) International publication number: WO 2019/087949

(57) **Abstract**

Provided are a leather-like sheet that maintains luxurious appearance similar to leather and shows displayed information clearly, and a display device using the same. The leather-like sheet having a colored resin layer to be disposed so as to cover a light emitting member, wherein the leather-like sheet has a first main face as the surface on the light emitting member side and a second main face on the side opposite to the first main face, has a total light transmittance in the range of 3 to 10% and a haze of 99% or less when the sheet is viewed from the second main face side, and includes no fiber substrate when the sheet is viewed in the thickness direction thereof.

## Description

### [Technical Field]

The present invention relates to a light transmissive sheet to be used as surface designed materials for various household electric products, automobile indicators, and the like, and a light emitting device using the sheet.

### [Background Art]

There have been conventionally suggested improvements in designability by irradiating a leather-like sheet from its rear face with a backlight to display characters or patterns of a light transmissive portion.

For example, PTL 1 has suggested a synthetic leather in which a raw material fabric is laminated with a skin layer composed of a polyurethane resin, the synthetic leather partially having a visible light transmittance of 0.10 to 11.90% in the wavelength region of 380 to 780 nm, and a display device using the synthetic leather.

PTL 2 has suggested a light transmissive leather-like sheet and a display device, wherein the leather-like sheet is composed of a fiber substrate, and is disposed so as to cover a light emitting member to transmit light emitted from the light emitting member through a light transmissive portion formed at least in one region of a plane of the sheet.

### [Citation List]

### [Patent Literature]

[PTL 1]
   Japanese Unexamined Patent Application Publication No. 2013-177714
[PTL 2]
   Japanese Unexamined Patent Application Publication No. 2016-81817

### [Summary of Invention]

### [Technical Problem]

Recent display panels of various household electric products, automobile indicators, and the like have become highly complicated, and accordingly, operation errors by users are more likely to occur. In order to prevent operation errors by users, it is effective to show users only information required at that time. From such a viewpoint, a study on use of the synthetic leather and leather-like sheet mentioned above has been started.

However, even if pieces of information to be shown on the display panel are narrowed down to ones required, many pieces of information have to be shown, and the information displayed is also necessary to be identifiable as to what it indicates. The synthetic leather and leather-like sheet mentioned above are inadequate for handling such a large amount of information.

For this reason, it is an object of the present invention to provide a leather-like sheet that maintains a luxurious appearance similar to leather and shows displayed information clearly, and a display device using the leather-like sheet.

### [Solution to Problem]

When it comes to synthetic and artificial leathers, it has been conventionally common to provide a fiber substrate therein such that synthetic and artificial leathers have a laminate structure similar to one another in order to make the synthetic and artificial leathers close to leather. However, this cannot achieve both concealability and clearness at high level. By removing the framework of the conventional concept of providing a fiber substrate, the present inventors have found that the problem to be solved by the present invention can be solved by setting the total light transmittance and haze within a specific range, having arrived at the present invention.

Thus, according to the present invention, provided are a leather-like sheet having a colored resin layer, to be disposed so as to cover a light emitting member, wherein
the leather-like sheet has a first main face as the surface on the light emitting member side and a second main face on the opposite side to the first main face, has a total light transmittance in the range 3 to 10% and a haze of 99% or less when the sheet is viewed from the second main face side, and includes no fiber substrate when the sheet is viewed in the thickness direction thereof, and
a leather-like display member composed of the light emitting member and the leather-like sheet attached on the surface of the light emitting member.

### [Advantageous Effect of Invention]

The leather-like sheet of the present invention has excellent concealability as well as excellent clearness when irradiated from the rear face with a backlight or the like, and thus, can provide a display device that maintains a luxurious appearance similar to leather and shows displayed information clearly.

### [Brief Description of Drawings]

[Fig. 1]

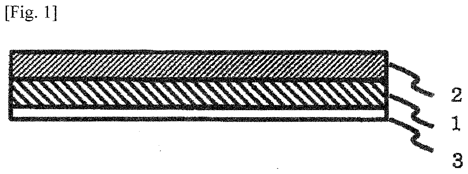

   Fig. 1 is an exemplary schematic view of a cross section in the thickness direction of a leather-like sheet according to the present invention.
[Fig. 2]

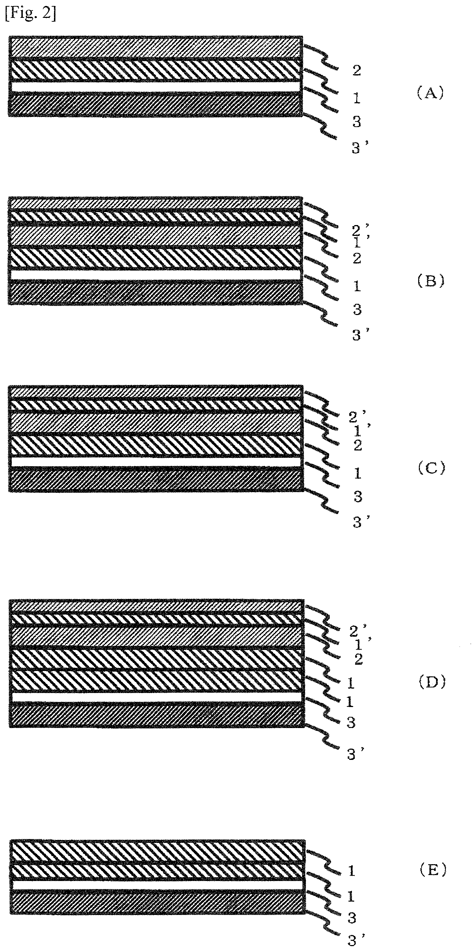

   Fig. 2 is other exemplary schematic views of cross sections in the thickness direction of the leather-like sheets according to the present invention.
[Fig. 3]

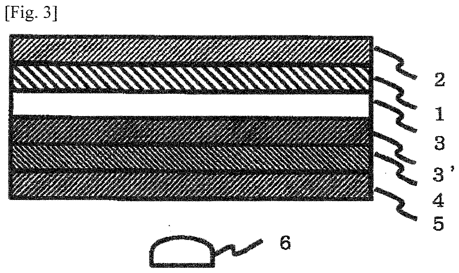

   Fig. 3 is a schematic cross-sectional view of a display device provided with the leather-like sheet according to the present invention.

### [Description of Embodiments]

The leather-like sheet of the present invention is characterized in that the sheet has a colored resin layer and is disposed so as to cover a light emitting member and includes no fiber substrate when the sheet is viewed in the thickness direction thereof. Hereinbelow, the leather-like sheet of the present invention will be described, referring to the surface on the light emitting member side as a first main face, and the surface opposite thereto as a second main face.

The present invention will be described in detail as follows.

In the leather-like sheet of the present invention, the total light transmittance ranges 3 to 10% when the sheet is viewed from the second main face side. The total light transmittance is required to be 10% or less from the viewpoint of concealability, and on the other hand, required to be 3% or more from the viewpoint of clearness. The lower limit of the total light transmittance is preferably 4%, more preferably 5%, and particularly preferably 5.5%. In contrast, the upper limit of the total light transmittance is preferably 9%, more preferably 8.5%, and particularly preferably 7.0%. The total light transmittance in the present invention is an average transmittance with respect to a light beam having a wavelength range of 380 to 780 nm. Such a total light transmittance can be adjusted by means of the layer structure of a colored resin layer and a pigment to be contained in the resin layer mentioned below.

The leather-like sheet of the present invention is required to have a haze of 99% or less when the sheet is viewed from the second main face side. Even if the total light transmittance is the same, setting the haze to 99% or less enables development of clearness, which cannot be achieved by a conventional leather-like sheet. The upper limit of the haze is preferably 98.5% and more preferably 98%. In contrast, the lower limit of the haze is not particularly limited from the viewpoint of clearness, but, on the other hand, is preferably 70% and more preferably 80% in order to ensure concealability. The haze in the present invention is a value obtained by dividing diffused transmittance by total transmittance with respect to a light beam having a wavelength range of 380 to 780 nm. Such a haze may not be achieved when a fiber substrate is used, but can be adjusted by means of the layer structure of the colored resin layer, a pigment to be contained in the resin layer, and the like mentioned below after employment of a structure without interposition of a fiber substrate.

The leather-like sheet in the present invention is formed by a colored resin layer without interposition of a fiber substrate, as mentioned above. The colored resin layer is not limited as long as the layer satisfies the total light transmittance and haze mentioned above and exhibits a leather-like appearance. In respect of a tactile sensation sensed by a hand, the colored resin layer is preferably an elastomer in which a pigment is contained.

As the elastomer in the present invention, an elastomer known per se can be employed. From the viewpoint of the above-mentioned optical properties, tactile sensation, durability, and the like, the elastomer is preferably at least one kind selected from the group consisting of urethane resin, vinyl chloride resin, and acrylic resin, and particularly preferably an elastomer mainly based on polyurethane resin.

For the urethane resin in the present invention, it is possible to use any of the following resins as a known skin for synthetic leather: polycarbonate-based polyurethane, polyether-based polyurethane, polyester-based polyurethane, polyester/polyether-based polyurethane, lactone-based polyurethane and the like. Among these, polycarbonate-based polyurethane is excellent in durability and heat resistance and suitably used as a skin of synthetic leather for vehicles or furniture.

Additionally, a polymer such as natural rubber, chloroprene, SBR, acrylic resin, silicone resin, vinyl chloride, and the like may be added to or be used in combination with such polyurethane resin, as long as the physical properties of the polyurethane resin as the skin layer are not compromised.

The colored resin layer in the present invention preferably contains a pigment as mentioned above, in order to satisfy the optical properties mentioned above. Pigments known per se can be employed, and various coloring pigments such as carbon black, oxide-based black pigment, phthalocyanine-based, anthraquinone-based, dioxazine-based, and benzimidazolone-based pigments and the like can be used. Among these, from the viewpoint of lightfastness, carbon black is preferable, and various coloring pigments such as oxide-based black pigment, phthalocyanine-based, anthraquinone-based, dioxazine-based, and benzimidazolone-based pigments and the like are also preferably used in combination. The amount of the pigment to be added is required to be appropriately selected such that a synthetic leather to be obtained has a total light transmittance in the range of 3 to 10%. For example, although the amount depends on the thickness of the colored resin layer, the pigment is added in an amount preferably in the range of 0.5 to 10% by weight and more preferably in the range of 0.5 to 5% by weight based on the weight of the colored resin layer. When an excessive amount of the pigment is present in the colored resin layer, the feel as synthetic leather is likely to be compromised.

In the colored resin layer described above, it is possible to use additives commonly used in polyurethane resin layers of synthetic leather, such as a flame retardant, an antioxidant, a light stabilizer, an ultraviolet absorber, and a hydrolysis inhibitor, as required, in addition to the pigment.

The thickness of the colored resin layer described above can be appropriately selected in accordance with applications. When the thickness is excessively large (thick), the clearness of an image to be transmitted is easily compromised. When the thickness is excessively small (thin), the concealability is compromised, and moreover, the texture and feel as leather-like ones are easily deteriorated, resulting a marked decrease in the handleability due to absence of a fiber substrate. The thickness of the colored resin layer in the present invention is preferably about 5 to 200 µm and more preferably 10 to 150 µm.

A method of producing a leather-like sheet of the present invention is not particularly limited. In general, the leather-like sheet may be produced by applying the polyurethane resin for skin layers described above on a grained surface of a release paper sheet and the like through an ordinary application means such as a doctor knife coater, a comma doctor coater, and the like, and heat-drying the resin. Alternatively, a colored resin layer may be melt-extruded through a die into a sheet form, or a transparent film is prepared as the transparent resin layer mentioned below, and a colored resin layer may be formed thereon by extrusion lamination.

The colored resin layer thus provided is preferably laminated further with an adhesion layer in order that the colored resin layer is disposed so as to cover a light emitting member. As the adhesion layer, for example, a two-component urethane resin-based adhesive, a moisture curable hot melt-type urethane resin-based adhesive, or the like may be used. From the viewpoint of further improving the clearness, an optically highly transparent adhesive layer is preferably used. Examples of such an optically highly transparent adhesive include acrylic or urethane-based adhesives. Among these, preferable examples thereof include polyether-based and polycarbonate-based urethane adhesives.

The adhesive layer in the present invention may be a single adhesive layer, or it is preferable to preliminarily form a first adhesive layer having excellent adhesion with a hot melt and then to laminate the first adhesive layer with the hot melt as a second adhesive layer. It is preferable that the thickness of the first adhesive layer be in the range of 10 to 200 µm and the thickness of a second adhesive layer be in the range of 15 to 150 µm.

The leather-like sheet of the present invention is characterized in that the sheet has a colored resin layer and is disposed so as to cover a light emitting member and that the haze is set to 99% or less because no fiber substrate exists when the sheet is viewed in the thickness direction thereof. From such viewpoints, the colored resin layer and layers present in the thickness direction thereof preferably include no void-containing layer, which is provided by foaming or the like and which enhances the scattering of light, such as a foamed resin layer and the like. Note that the void-containing layer referred to herein means a layer that includes voids occupying 5% or more of the area of a cross section thereof and more preferably a layer that includes voids occupying 3% or more of the area of the cross section, when the cross section thereof is observed.

The leather-like sheet of the present invention preferably contains transparent particles in any of the colored resin layer, the first main face side and the second main face side, from the viewpoint of suppressing the haze at a low level. Particularly from the viewpoint of the handleability, the colored resin layer preferably contains transparent particles. When such transparent particles are contained, it is easier to suppress diffusion of transmitted light and to suppress the haze at a low level. The content of the transparent particles may be appropriately adjusted in accordance with the desired haze or total light transmittance. When the transparent particles are contained in the colored resin layer, the content is preferably 0.1 to 20% by weight and more preferably 1 to 10% by weight based on the weight of the colored resin layer.

The transparent particles in the present invention are not particularly limited as long as the particles are a transparent particulate substance having a refractive index of about 1.4 to 1.8. Examples thereof include glass beads and acrylic beads. The shape of the transparent particles is not particularly limited, but from the viewpoint of suppressing diffusion of transmitted light, particles having a definite shape such as a spherical shape, a bowl shape (a shape obtained by cutting a sphere into two parts by a plane through its center), a triangular prism shape, a quadrangular prism shape, and a trigonal pyramid shape are preferred to particles of undefined shape. Particularly, spherical or bowl-shaped ones are preferable. The particle size of the transparent particles, which equals a diameter of a sphere converted from the particle so as to have the same volume, is preferably in the range of 1 to 20 µm and particularly preferably in the range of 1.5 to 12 µm. when the volume

The leather-like sheet of the present invention preferably has a transparent resin layer on the second main face side of the colored resin layer. When the sheet has such a transparent resin layer, the durability is improved and designability with deepness can be achieved. Examples of the resin for the transparent resin layer can include the resins the same as those described for the colored resin layer, and resins having higher hardness, for example, acrylic resins are also preferably used. The thickness of the transparent resin layer, if provided, is preferably 1 to 50 µm.

The leather-like sheet of the present invention preferably has a leather-like grain pattern imparted on its second main face side. Such a grain pattern can be imparted by a method known per se. For example, it is possible to impart the grain pattern by sandwiching a sheet between rolls having the grain pattern provided thereon and transferring the grain pattern to the sheet. When the carrier film mentioned below is used, it is also possible to impart the grain pattern by preliminarily imparting a grain pattern to the carrier film and then transferring the grain pattern to the sheet. The maximum height Rz of such a grain pattern is not particularly limited, but is about 10 to 1000 µm.

The colored resin layer and the transparent resin layer may be respectively provided by not only one layer but also a plurality of layers. For example, providing a thin colored resin layer by using a gravure coater or the like on the laminate of the colored resin layer and the transparent resin layer mentioned above is preferable because the feel of the surface is more easily improved and both visibility and concealability are more easily achieved at a higher level. Note that, from the viewpoint of the feel, the resin layer located on the surface preferably contains inorganic particles such as silica particles as far as the effect of the present invention is not compromised.

The leather-like sheet of the present invention preferably has a difference between the maximum value and the minimum value of the total light transmittance of 1.0% or less, and more preferably 0.5% or less in the in-plane direction when an area of, for example, 10 cm × 10 cm of the sheet is observed. When the leather-like sheet is allowed to have such a small difference, both visibility and concealability can be achieved by covering the light emitting member with any portion of the leather-like sheet.

According to the present invention, attaching the leather-like sheet of the present invention mentioned above to a light emitting member on the surface thereof can provide a leather-like display member.

The leather-like display member of the present invention will be described using Figs. 1 to 3. The leather-like display member of the present invention has light emitted from the first main face side toward the second main face side of the leather-like sheet of the present invention mentioned above (hereinbelow, also referred to as the "light source"). Fig. 1 is an exemplary schematic view of a cross section in the thickness direction of a leather-like sheet according to the present invention, and Fig. 2 is another exemplary schematic view of a cross section in the thickness direction of a leather-like sheet according to the present invention. For example, as shown in Fig. 3, the leather-like sheet is attached on a molded member 5, and a light source 6 is disposed on the first main face side of the leather-like sheet and used in a lighted-on, lighted-off, or blinking state. Examples of the light source 6 include LED, fluorescent lamp, incandescent lamp, HID (high luminance discharge lamp) and the like. The shape and size thereof are not limited, but LED is preferable because of its low power consumption. In this case, a printed layer 4 having characters to be displayed is provided between the light source and the leather-like sheet, and the light source 6 at a part to be displayed is lighted on or blinked. This enables individuals such as drivers and the like to recognize only the required information. Additionally, controlling the luminance, color of light, blinking, and the like as appropriate enables the information to be more selectively recognized.

In other words, in the leather-like sheet of the present invention satisfying a specific total light transmittance and haze, light from the light source 6 emitted from the first main face side toward the second main face side enables printed characters and the like on the light source side to be visually recognized through a colored resin layer 2. This light source 6 is not particularly limited, but one having a luminance of about 30 to 200 cd/m² is preferably used.

Next, a method of producing a leather-like sheet of the present invention will be described.

The method for producing a leather-like sheet of the present example is not particularly limited, and the sheet can be produced by the following method, for example. Usually, in a method for producing an artificial leather, a step of producing a non-woven fabric, impregnating the fabric with a polymeric elastomer, and solidifying the polymeric elastomer is conducted. In the present invention, a fiber substrate such as a non-woven fabric is not interposed. Thus, it is only required to prepare a water-based aqueous dispersion or solution of a resin, as a coating liquid for forming a colored resin layer, which is composed of, for example, a polymer such as polyester-based elastomer, polyurethane, NBR, SBR, acryl and the like and in which a pigment is contained, to apply this liquid to, for example, a carrier film, and to dry and solidify the liquid. The drying temperature is preferably 70°C or more and 150°C or less and particularly 90°C or more and 130°C or less, although depending on the coating agent used.

With a purpose of improving various durabilities such as lightfastness, heat resistance, water resistance, solvent resistance and the like of the colored resin layer obtained, a stabilizer such as antioxidant, ultraviolet absorber, hydrolysis inhibitor and the like, and a crosslinking agent such as epoxy resin, melamine resin, isocyanate compound, aziridine compound, polycarbodiimide compound and the like also can be blended and used. As the pigment, various inorganic and organic pigments can be blended. Additionally, the flexibility of the leather-like sheet can be adjusted by adding various repellents such as silicone-based, fluorine-based repellents and the like and a hydrophilic agent such as polyethylene glycol and the like.

The method for applying to the carrier film may be any of methods usually conducted, and examples thereof include a coating method, a spraying method and the like.

In the present invention, in order to make the carrier film mentioned above to exhibit the feel and visual effect of the leather-like sheet, a release film having a pattern of such as grains imparted thereto is preferably used. Alternatively, sheets to form each layer may be preliminarily prepared, and then, these sheets may be laminated and heat pressure-bonded or heat fusion-bonded. On the colored resin layer obtained or a transparent resin layer formed thereon, a colored resin layer or a transparent resin layer may be further formed by a coating treatment using a gravure coater or the like. On the adhesive layer provided as mentioned above, another adhesive layer such as a hot melt may be further provided.

The leather-like sheet of the present invention thus obtained has excellent concealability as well as excellent clearness when irradiated from the rear face with a backlight or the like, and thus, can provide a display device that maintains a luxurious appearance similar to leather and shows displayed information clearly.

### [Examples]

The leather-like sheet of the present invention will be described in detail using the following examples, but the present invention is not limited thereto. Note that various properties in the present invention were determined by the following methods.

### (1) Total light transmittance and haze

The total light transmittance and haze of each leather-like sheet obtained were each measured in compliance with JIS K7361 using a haze meter (trade name "NDH-2000" manufactured by NIPPON DENSHOKU INDUSTRIES CO., LTD.).

### (2) Thickness

Each leather-like sheet obtained was cut, and the cross section was observed with a microscope to measure the total thickness and the thickness of each layer.

### (3) Visibility

On a notebook computer, Dynabook R731/D manufactured by Toshiba Corporation, Notepad, which is an accessory software, was started at the luminance level of 4 to display characters "Critical information" ("Critical information" was actually written using kanji character, and the same explanation will be applied hereinbelow) in the "MS Mincho" font having font sizes of 12, 14, 16, 18, 20, 24, 28, and 36. Each leather-like sheet obtained was attached on the display surface, and evaluation was made on whether "Critical information" under the leather-like sheet can be read or not, based on the following criteria.

### Visibility

Excellent: It was possible to clearly confirm the characters of all the font sizes.

Good: It was possible to recognize the characters displayed with the font size of 24 or larger.

Fair: It was possible to recognize most of the characters with the font size of 36, but it was impossible to recognize some of the characters.

Poor: It was impossible to recognize most of the characters even with the font size of 36.

### (4) Concealability

On a white sheet, characters "Critical information" were printed with the MS Mincho font in character sizes 4 mm, 6 mm, and 10 mm after the printing in black. Each leather-like sheet obtained was attached on the printed white sheet, and disposed on the center of the seat in the second row of an Alphard manufactured by Toyota Motor Corporation. Evaluation was made on whether "Critical information" under the leather-like sheet can be read or not at noon under the condition of not being exposed to direct external light, based on the following criteria.

### Concealability

Excellent: It was impossible to confirm even the presence for all the characters.

Good: The presence of the characters can be confirmed, but it was impossible to confirm what was described.

Fair: It was possible to confirm most of the characters, but it was impossible to confirm some of the characters.

Poor: It was possible to confirm what was described for all the characters.

### [Example 1]

On a release paper sheet having a grain pattern imparted, applied was a coating liquid 2 prepared by mixing 100 parts by weight of a silicone-modified polycarbonate-based urethane (trade name: RESAMINE NES-9900NT manufactured by Dainichiseika Color & Chemicals Mfg. Co., Ltd.), 15 parts by weight of N,N-dimethylformamide, and 15 parts by weight of isopropyl alcohol at a coating weight of 120 g/m². After the application, the coating liquid was dried at 110°C for two minutes to form a transparent resin layer 2 having a thickness of 10 µm and made of polymeric elastomer.

Additionally, on the surface, not in contact with the release paper sheet, of the transparent resin layer 2, applied was a coating liquid 1 prepared by mixing 100 parts by weight of a silicone-modified polycarbonate-based urethane (RESAMINE NES-9900NT manufactured by Dainichiseika Color & Chemicals Mfg. Co., Ltd., solid content: 20% by weight), 15 parts by weight of N,N-dimethylformamide, 15 parts by weight of isopropyl alcohol, and 5 parts by weight of carbon black pigment (solid content: 15% by weight, solvent: N,N-dimethylformamide) at a coating weight of 150 g/m². After the application, the coating liquid was dried at 110°C for two minutes to form a colored resin layer 1 having a thickness of 40 µm and made of polymeric elastomer.

Subsequently, on the surface, not in contact with the transparent resin layer 2, of the colored resin layer 1, applied was a coating liquid 3 prepared by mixing 100 parts by weight of a polyurethane-based adhesive (trade name: RESAMINE UD8373BL manufactured by Dainichiseika Color & Chemicals Mfg. Co., Ltd.), 10 parts by weight of a crosslinking agent (trade name: RESAMINE NE crosslinking agent manufactured by Dainichiseika Color & Chemicals Mfg. Co., Ltd.), 10 parts by weight of N,N-dimethylformamide, and 10 parts by weight of methyl ethyl ketone at a coating weight of 150 g/m². After the application, the coating liquid was dried at 90°C for two minutes to form an adhesion layer 3 having a thickness of 40 µm.

Next, a HOTMELT sheet 3' (trade name NASA-T1 manufactured by Sambu Fine Chemical Co., Ltd.) was superposed on the surface, not in contact with the colored resin layer 1, of the adhesion layer 3, and the laminate was pressure-bonded on the surface of a heating cylinder at a temperature of 110°C by passing through a roll having a gap of 0.3 mm to form an adhesion layer 3' (HOTMELT layer) having a thickness of 150 µm.

Thereafter, the laminate was left under atmosphere at a temperature of 70°C for two days. Then, the release paper sheet was peeled off, and, on the surface from which the release paper sheet was peeled off (the face having a grain pattern imparted), applied as a surface treatment agent by means of a gravure coater was a coating liquid 1' prepared by mixing a polycarbonate-based resin/silica (trade name: RESAROID LU-4305NT manufactured by Dainichiseika Color & Chemicals Mfg. Co., Ltd.) and 15 parts by weight of DMF. After the application, the coating liquid was dried at 120°C for three minutes to form a colored resin layer 1' having a thickness of 5 µm, and thus, a leather-like sheet was produced.

The properties of the leather-like sheet obtained are shown in Table 1.

### [Example 2]

The procedure was repeated in the same manner as in Example 1 except that the thickness of each layer and the content of the carbon black pigment in the colored resin layers were changed as shown in Table 1.

The properties of the leather-like sheet obtained are shown in Table 1.

### [Example 3 and Comparative Examples 1 to 3]

The procedure was repeated in the same manner as in Example 1 except that the colored resin layer 1' by means of a gravure coater was not provided, a polycarbonate-based urethane (trade name: CRISVON NY-393 manufactured by DIC Corporation) was used instead of the silicone-modified polycarbonate-based urethane (trade name: RESAMINE NES-9900NT manufactured by Dainichiseika Color & Chemicals Mfg. Co., Ltd.), and the thickness of each layer and the content of the carbon black pigment in the colored resin layer were changed as shown in Table 1.

The properties of the leather-like sheets obtained are shown in Table 1.

### [Example 4]

The procedure was repeated in the same manner as in Example 1 except that the thickness of each layer and the content of the carbon black pigment in the colored resin layers were changed as shown in Table 1 and 1% by weight of spherical acrylic bead particles (trade name: ART PEARL G-800 manufactured by Negami Chemical Industrial Co., Ltd, average particle size: 6 µm) were contained in the colored resin layers.

The properties of the leather-like sheet obtained are shown in Table 1.

### [Example 5]

The procedure was repeated in the same manner as in Example 4 except that the colored resin layer 1' by means of a gravure coater was not provided.

The properties of the leather-like sheet obtained are shown in Table 1.

### [Examples 6 to 8]

The procedure was repeated in the same manner as in Example 5 except that the thickness of each layer and the content of the carbon black pigment in the colored resin layer were changed as shown in Table 1, the spherical acrylic bead particles contained in the colored resin layer were changed to bowl-shaped acrylic bead particles (trade name: DILAC POWDERL-7419 manufactured by DIC Corporation, average particle size: 10 µm), and the content of the particles was changed as shown in Table 1.

The properties of the leather-like sheets obtained are shown in Table 1.

### [Example 9]

The procedure was repeated in the same manner as in Example 6 except that the spherical acrylic bead particles contained in the colored resin layer were changed to spherical acrylic bead particle having a small particle size (trade name: ART PEARL J-4P manufactured by Negami Chemical Industrial Co., Ltd, average particle size: 2.2 µm).

The properties of the leather-like sheet obtained are shown in Table 1.

### [Example 10]

The procedure was repeated in the same manner as in Example 6 except that the spherical acrylic bead particles contained in the colored resin layer were changed to flat particles (trade name: DSN-30 manufactured by Nemoto Lumi-Materials Co., Ltd., average particle size: 5 µm).

The properties of the leather-like sheet obtained are shown in Table 1.

### [Example 11]

The procedure was repeated in the same manner as in Example 5 except that the thickness of each layer and the content of the carbon black pigment in the colored resin layer were changed as shown in Table 1 and spherical acrylic bead particles were not contained in the colored resin layer.

The properties of the leather-like sheet obtained are shown in Table 1.

### [Comparative Example 4]

The surface of the HOTMELT layer side of the leather-like sheet of Example 2 was laminated with a non-woven fabric substrate (non-woven fabric having a thickness of 0.55 mm and a density of 0.302 g/cm³ formed of polyethylene terephthalate staple fibers (average single yarn fineness: 2.2 dtex, average fiber length: 51 mm) by use of needle punch), and the laminate was pressure-bonded on the surface of a heating cylinder at a temperature of 120°C by passing through the gap between the cylinder and a roll.

The properties of the leather-like sheet obtained are shown in Table 1.

### [Comparative Example 5]

The procedure was repeated in the same manner as in Comparative Example 4 except that the colored resin layer 1' by means of a gravure coater was not formed.

The properties of the leather-like sheet obtained are shown in Table 1.

### [Comparative Example 6]

The surface of the HOTMELT layer side of the leather-like sheet of Example 4 was laminated with a non-woven fabric substrate (non-woven fabric having a thickness of 1.35 mm and a density of 0.332 g/cm³ formed of polyethylene terephthalate staple fibers (average single yarn fineness: 2.2 dtex, average fiber length: 51 mm) by use of needle punch), and the laminate was pressure-bonded on the surface of a heating cylinder at a temperature of 120°C by passing through the gap between the cylinder and a roll.

The properties of the leather-like sheet obtained are shown in Table 1.

**[Table 1]**

| | Colored resin layer 1' | | Transparent resin layer | Colored resin layer 1 | | | | Optical properties | | | Visual properties | |
|---|---|---|---|---|---|---|---|---|---|---|---|---|
| | Pigment | Thickness | Thickness | Pigment | Bead | | Thickness | Haze | Total light transmittance | ΔMax - Min | Transmit -ting property | Concealability |
| | wt% | µm | µm | wt% | µm | wt% | µm | % | % | % | - | - |
| Ex. 1 | 1 | 5 | 10 | 3.6 | - | - | 40 | 98.3% | 4.04 | 0.32 | Fair | Good |
| Ex. 2 | 2 | 5 | 10 | 3.5 | - | - | 40 | 98.2% | 4.37 | 0.22 | Fair | Good |
| Ex. 3 | - | - | - | 2.2 | - | - | 50 | 91.1% | 5.28 | 0.43 | Good | Good |
| Cex. 1 | - | - | - | 0 | - | - | 50 | 84.9% | 90.17 | 0.07 | Excellent | Poor |
| Cex. 2 | - | - | - | 3.6 | - | - | 50 | 95.3% | 0.86 | 0.11 | Poor | Excellent |
| Cex. 3 | - | - | - | 0.7 | - | - | 50 | 94.4% | 34.23 | 1.32 | Excellent | Poor |
| Ex. 4 | 1.5 | 5 | 10 | 3.5 | 6 | 1 | 40 | 97.8% | 5.42 | 0.16 | Good | Good |
| Ex. 5 | - | - | 10 | 3.5 | 6 | 1 | 40 | 94.6% | 8.64 | 0.08 | Excellent | Fair |
| Ex. 6 | - | - | 10 | 3.6 | 10 | 1 | 40 | 96.9% | 5.56 | 0.16 | Good | Good |
| Ex. 7 | - | - | - | 1.8 | 10 | 5 | 50 | 97.1% | 7.29 | 0.43 | Good | Fair |
| Ex. 8 | - | - | - | 1.8 | 10 | 10 | 50 | 97.0% | 8.11 | 0.34 | Excellent | Fair |
| Ex. 9 | - | - | 10 | 3.6 | 2.2 | 1 | 40 | 96.4% | 5.05 | 0.79 | Excellent | Good |
| Ex. 10 | - | - | 10 | 3.6 | 5 | 1 | 40 | 96.8% | 5.62 | 0.08 | Good | Good |
| Ex. 11 | - | - | - | 2.2 | - | - | 50 | 96.7% | 3.92 | 0.06 | Fair | Good |
| Cex. 4 | 2 | 5 | 10 | 3.5 | - | - | 40 | 100.0% | 2.13 | 0.16 | Poor | Excellent |
| Cex. 5 | - | - | 10 | 3.5 | - | - | 40 | 99.5% | 4.22 | 0.39 | Poor | Good |
| Cex.6 | 1.5 | 5 | 10 | 3.5 | - | - | 40 | 100.0% | 0.64 | 0.33 | Poor | Excellent |

| | | | | | | | | | | | | |
|---|---|---|---|---|---|---|---|---|---|---|---|---|
| Ex.: Example, Cex.: Comparative Example | | | | | | | | | | | | |

### [Industrial Applicability]

The leather-like sheet of the present invention has excellent concealability as well as excellent clearness when irradiated from the rear face with a backlight or the like, and thus can be used for vehicle interiors and the like, as a display device that maintains a luxurious appearance similar to leather and shows displayed information clearly.

### [Reference Signs List]

1,1' Colored resin layer
2, 2' Transparent resin layer
3,3' Adhesion layer
4 Printed layer
5 Molded member
6 Light source

## Claims

1. A leather-like sheet having a colored resin layer, to be disposed so as to cover a light emitting member, wherein
the leather-like sheet has a first main face as the surface on the light emitting member side and a second main face on the opposite side to the first main face, has a total light transmittance in the range of 3 to 10% and a haze of 99% or less when the sheet is viewed from the second main face side, and includes no fiber substrate when the sheet is viewed in the thickness direction thereof.

2. The leather-like sheet according to claim 1, wherein the colored resin layer is a resin layer in which a pigment is contained in an elastomer.

3. The leather-like sheet according to claim 2, wherein a carbon black pigment is contained as the pigment.

4. The leather-like sheet according to claim 2, wherein the elastomer is at least one kind selected from the group consisting of a urethane resin, a vinyl chloride resin, and an acrylic resin.

5. The leather-like sheet according to any of claims 2 to 4, wherein the colored resin layer contains transparent particles in addition to the pigment.

6. The leather-like sheet according to claim 5, wherein particle sizes of the transparent particles are in the range of 1 to 20 µm.

7. The leather-like sheet according to claim 1, wherein the colored resin layer has substantially no void in the thickness direction thereof.

8. The leather-like sheet according to claim 1, wherein an adhesion layer is present on the first main face side of the colored resin layer.

9. The leather-like sheet according to claim 1, wherein a transparent resin layer is present on the second main face side of the colored resin layer.

10. The leather-like sheet according to claim 1, wherein a leather-like grain pattern is imparted on the second main face side.

11. The leather-like sheet according to claim 1, wherein a difference between the maximum value and the minimum value of the total light transmittance is 1.0% or less in the in-plane direction.

12. A leather-like display member, comprising a light emitting member and the leather-like sheet according to any of claims 1 to 11 attached on the surface thereof.
